# EUROPEAN PATENT APPLICATION

(11) **EP 1 683 672 A2**
(43) Date of publication of application: **26.07.2006**
(21) Application number: 06001148.3
(22) Date of filing: 19.01.2006
(51) Int. Cl.: B60K 15/035

(54) **Fuel-effusion prevention valve**

(30) Priority: 21.01.2005 JP 2005014313
(71) Applicant: Kyosan Denki Co., Ltd., Koga City, Ibaraki-Pref., 306-0206 (JP); Toyota Jidosha Kabushiki Kaisha, Toyota-shi, Aichi-ken, 471-8571 (JP)
(72) Inventor: Takahashi, Tetsuya, Koga City Ibaraki-Pref., 306-0206 (JP); Shimamura, Hiroshi, Koga City Ibaraki-Pref., 306-0206 (JP); Hirose, Masayuki, Toyota-shi, Aichi-ken, 471-8571 (JP)
(74) Representative: Winter, Brandl, Fürniss, Hübner Röss, Kaiser, Polte Partnerschaft Patent- und Rechtsanwaltskanzlei

(57) **Abstract**

A fuel-effusion prevention valve according to the invention includes a case (30) in which an open portion (31) is formed and which is mounted inside a fuel tank (25), and a valve seat (33) which is formed in the open portion (31), and a float (60) which has a valve body (61) able to close off the open portion of the valve seat (33) and which moves freely up and down in the case (30). Further, at least one communicating passage (68) which extends from a top surface to a bottom surface of the float (60) formed in the float (60).

## Description

### BACKGROUND OF THE INVENTION

### 1. Field of the Invention

This invention relates to a fuel-effusion prevention valve for an automobile fuel tank. The fuel-effusion prevention valve allows fuel vapor in the fuel tank to flow out to the fuel vapor canister, which contains an absorbing agent to adsorb the fuel vapor and is disposed outside of the fuel tank, while also preventing fuel in the fuel tank from flowing out to the canister when the fuel level rises.

### 2. Description of the Related Art

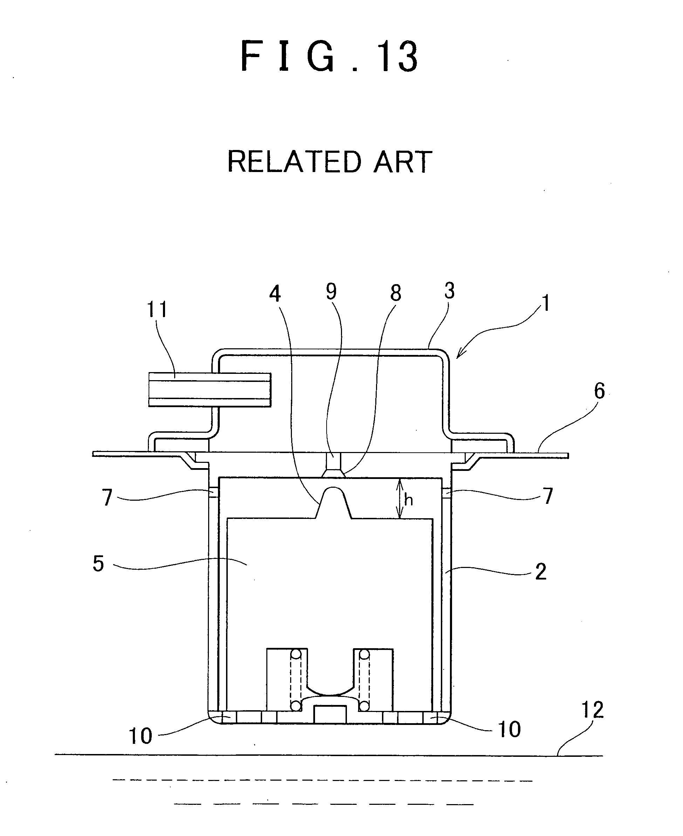

One known fuel-effusion prevention valve for an automobile fuel system is shown in FIG. 13. The fuel-effusion prevention valve 1 is mounted to an upper wall portion of a fuel tank 6, and is configured such that a float 5, which is formed integrally with a valve body 4, is provided at an upper portion inside a space defined by a case 2 that is inserted into the fuel tank 6 and covered from above with a cover 3.

Also, a valve seat 8 having an opening 9 is provided in generally the center in the top surface of the case 2. A plurality of vent holes 7 formed in the upper side wall of the case 2 allow fuel vapor to escape, while a plurality of fuel entrance holes 10 are provided in the bottom surface of the case 2.

During normal operation, the float 5 is positioned low in the case 2 so the opening 9 is open. Accordingly, if fuel vapor is produced due to, for example, an increase in temperature within the fuel tank 6, that fuel vapor flows through the vent holes 7 and into the case 2. The fuel vapor then flows through the opening 9 and through a passage 11 to a canister, not shown, where it is adsorbed by an adsorbent provided in the canister.

When the vehicle bounces up and down or turns, for example, the level of the fuel in the fuel tank 6 fluctuates greatly. When this happens, some fuel enters the case 2 through the fuel entrance holes 10 and pushes the float 5 up. As a result, the valve body 4, which is formed on the top portion of the float 5, abuts the valve seat 8 in which the opening 9 is formed, thereby closing off the opening 9 and preventing fuel from flowing into the canister through the opening 9 and the passage 11.

In the fuel-effusion prevention valve 1 shown in FIG. 13, a large portion of the case 2 is housed within the fuel tank 6, so the distance h between the float 5 and the opening 9 is small. As a result, fuel that enters the case 2 when the vehicle bounces up and down or turns may flow out of the case 2 through the opening 9 before the opening 9 is closed by the valve body 4. Fuel adhering to the top surface of the float 5 may also flow out of the case 2 through the opening 9 when vibrations of the vehicle cause the opening 9 to open briefly from a closed position.

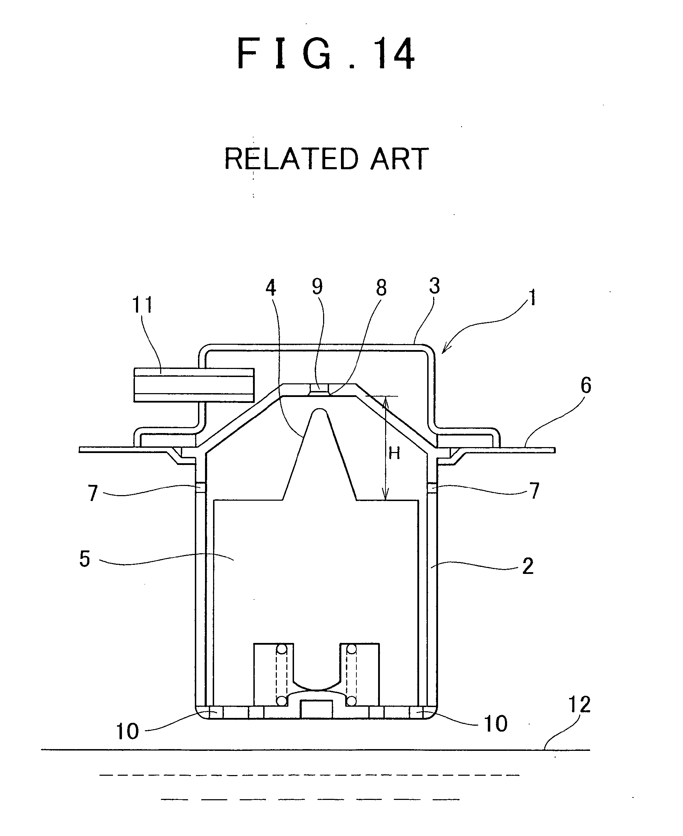

The fuel-effusion prevention valve 1 shown in FIG. 14 was designed to minimize these sorts of adverse effects. Compared with the fuel-effusion prevention valve 1 shown in FIG. 13, this fuel-effusion prevention valve 1 shown in FIG. 14 is configured such that the valve seat 8, in which the opening 9 is formed, is located above the fuel tank 6. All other structure is the same.

Locating the valve seat 8 in which the opening 9 is formed above the fuel tank 6 in this way increases the distance H between the top surface of the float 5 and the opening 9. As a result, fuel that enters the case 2 when the vehicle bounces up and down or turns is prevented from flowing out of the case 2 through the opening 9 before the opening 9 can be closed by the valve body 4. Moreover, fuel adhering to the top surface of the float 5 is prevented from flowing out of the case 2 through the opening 9 when the opening 9 is supposed to be closed but opens briefly from vibrations of the vehicle (Japanese Patent Application Publication No. JP-A-8-244477).

In recent years, however, there has been a demand for automobiles to have roomier interiors. As a result, vehicle floors are becoming lower and lower. As vehicle floors become lower, fuel tanks are becoming flatter, and there is no longer room for anything to protrude above it.

Therefore, the fuel-effusion prevention valve 1 of the shape shown in FIG. 14 is cannot be used with a flat gas tank 6, and the fuel-effusion prevention valve 1 of the shape shown in FIG. 13 is unsuitable for use because of the deficiencies identified above.

### SUMMARY OF THE INVENTION

The invention thus aims to provide a fuel-effusion prevention valve which prevents fuel from flowing out to a canister when a vehicle bounces up and down or turns or the like, even when there is not much distance between the top surface of the float and an opening formed in the top surface of the case.

A fuel-effusion prevention valve according to one aspect of the invention includes a case in which an open portion is formed and which is mounted inside a fuel tank; and a valve seat which is formed in the open portion; and a float which has a valve body able to close off the open portion of the valve seat and which moves freely up and down in the case. Further, at least one communicating passage which extends from a top surface to a bottom surface of the float is formed in the float.

According to this aspect of the invention as well, forming at least one communicating passage in the float which extends from the top surface to the bottom surface enables any fuel which may have entered the case from the fuel tank when the vehicle bounced up and down or turned and reached the top surface of the float, to flow down to the lower portion of the float through the communicating passage and return to the fuel tank. As a result, it is possible to reduce the amount of fuel that flows out to the canister and increase the reliability of the fuel-effusion prevention valve.

In this aspect of the invention, a plurality of the communicating passages may also be formed at substantially equidistant intervals concentrically centered around the valve body.

In the foregoing aspect of the invention, a beveled depression may also be formed at the peripheral edge of each communicating passage in the top surface of the float.

Further, in the foregoing aspect of the invention, the beveled depression may also be formed concentrically centered around the valve body.

This aspect of the invention thus enables fuel which has entered the area above the float to quickly be returned to below the float via the communicating passages which are close. Accordingly, it is possible to reduce the amount of fuel that flows out to the canister and increase the reliability of the fuel-effusion prevention valve.

In this aspect of the invention, a support member which supports the float when the valve is open may further be provided below the float in the case. This support member may be configured to interrupt the flow of fuel from the communicating passage into an area enclosed by the support member and an inside wall surface of the case when the float abuts the support member.

According to this aspect of the invention, if fuel from the fuel tank enters the case when the vehicle bounces up and down or turns, that fuel will no longer reach the top surface of the float directly through the opening in the lower portion of the communicating passage and flow out of the case through the opening formed therein.

In this aspect of the invention, a depression may be formed on an inner peripheral side of a portion of the support member that abuts the float, in an upper portion of the support member, and a hole may be formed in the depression.

According to this aspect of the invention, fuel that flows from above the float to below the float through the communicating passage can be returned to the fuel tank through the hole formed in the upper portion of the support member.

In this aspect of the invention, the float may be configured such that a portion of the bottom portion thereof is positioned above the area enclosed by the inside wall surface of the case and a side wall surface of the support member.

According to this aspect of the invention, fuel from the fuel tank that entered the case when the vehicle bounced up and down or turned flows into the narrow area between the inside wall surface of the case and the side wall surface of the support member. As it does so, the velocity with which the fuel rises increases so that it strikes the bottom portion of the float at a high velocity. As a result, the float quickly moves upward, closing the opening formed in the case, thereby preventing fuel from flowing out. Moreover, it takes less time for the valve body of the float to abut the valve seat, which makes it possible to more reliably prevent fuel from flowing out of the case 30.

In the foregoing aspect of the invention, the float may be configured such that a bottom portion of the float includes a skirt portion around the periphery of the float.

According to this aspect of the invention, even if the height of the float has to be reduced because the fuel tank is made flat, the skirt portion enables the effective height of the float to actually be increased. Therefore, vertical movement of the float is made smooth and the time it takes for the float to move up to where it abuts the valve seat is reduced. As a result, it is possible to more reliably prevent fuel from flowing out to the canister.

In the foregoing aspect of the invention, a groove may also be formed in a circumferential direction in a side wall surface of the float.

According to this aspect of the invention, fuel that has entered the case then enters the groove, which increases the force pushing the float upwards. Further, the contact area between the inside wall surface of the case and the outer peripheral surface of the float is reduced, which improves the response of the float to upward movement. As a result, it takes less time for the float to close the valve, which makes it possible to more reliably prevent fuel from flowing out of the canister.

In the foregoing aspect of the invention, the fuel-effusion prevention valve may be configured to further include a crank-shaped flange portion. This flange portion may be attached to an upper portion of the fuel tank, and a vent hole may be formed in a side surface of the upper portion of the case that is adjacent to a middle vertical portion of the flange portion.

According to this aspect of the invention, fuel is prevented from entering the case directly through the vent hole even if fuel in the fuel tank surges up violently when the vehicle bounces up and down or turns.

### BRIEF DESCRIPTION OF THE DRAWINGS

The foregoing and/or further objects, features and advantages of the invention will become more apparent from the following description of preferred embodiments with reference to the accompanying drawings, in which the same or corresponding portions are denoted by the same reference numerals and wherein:
FIG. 1 is an overall sectional view of a fuel-effusion prevention valve according to the invention when the valve is open;
FIG. 2 is an overall sectional view of the fuel-effusion prevention valve according to the invention when the valve is closed;
FIG. 3 is a bottom view of the fuel-effusion prevention valve according to the invention;
FIG. 4 is a back view of the fuel-effusion prevention valve according to the invention;
FIG. 5 is a sectional view of a fixing member of the fuel-effusion prevention valve according to the invention;
FIG. 6 is a bottom view of the fixing member of the fuel-effusion prevention valve according to the invention;
FIG. 7 is a back view of the fixing member of the fuel-effusion prevention valve according to the invention;
FIG. 8 is a sectional view of a float of the fuel-effusion prevention valve according to the invention;
FIG. 9 is a plan view of the float of the fuel-effusion prevention valve according to the invention;
FIG. 10 is a bottom view of the float of the fuel-effusion prevention valve according to the invention;
FIG. 11 is a sectional view of a first modified example of the float of the fuel-effusion prevention valve according to the invention;
FIG. 12 is a sectional view of a second modified example of the float of the fuel-effusion prevention valve according to the invention;
FIG. 13 is a sectional view of a fuel-effusion prevention valve of related art; and
FIG. 14 is a sectional view of a fuel-effusion prevention valve of other related art.

### DETAILED DESCRIPTION OF THE PREFERRED EMBODIMENTS

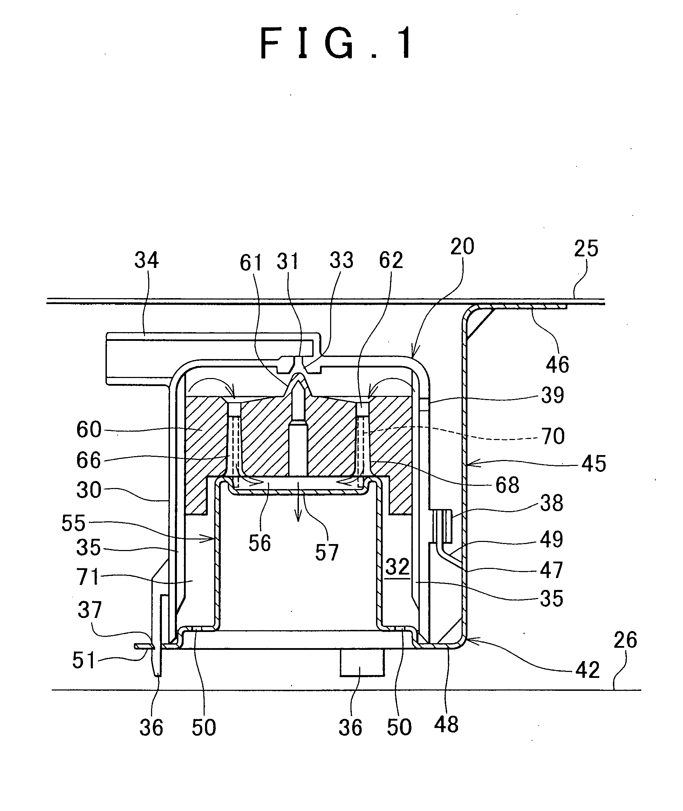

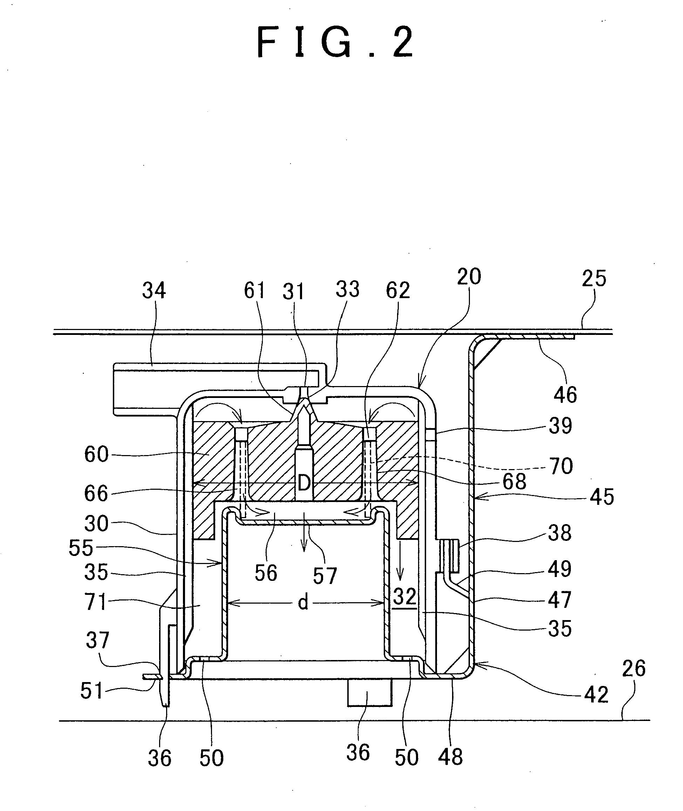

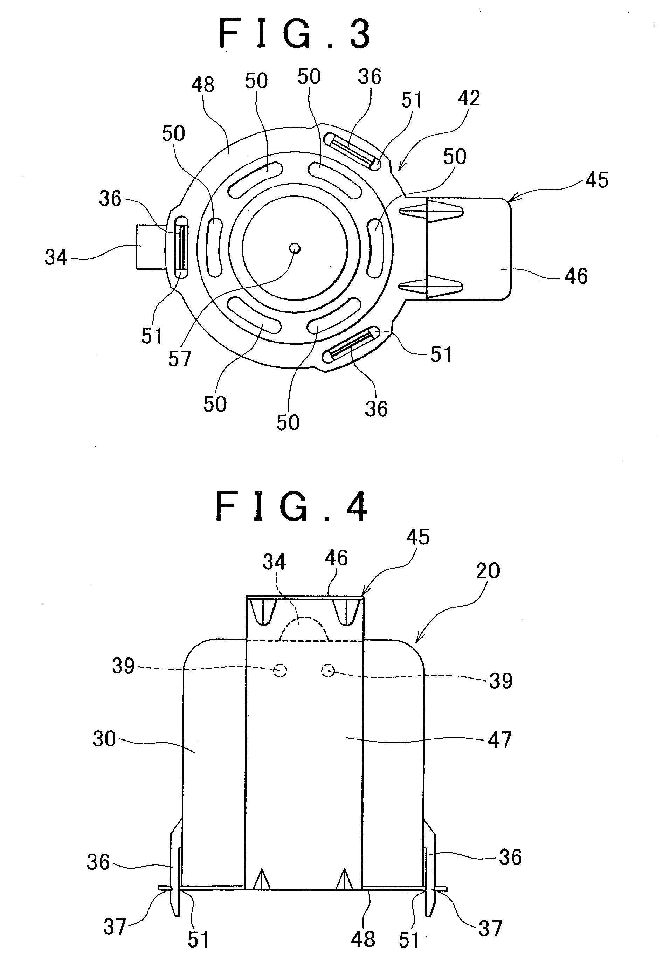

FIGS. 1 and 2 are overall sectional views showing a fuel-effusion prevention valve when the valve is open and closed, respectively. FIG. 3 is a bottom view of the fuel-effusion prevention valve. The fuel-effusion prevention valve of this invention may be used for any number of applications, but the following description describes its use in a fuel system of an automobile.

A fuel-effusion prevention valve 20 includes a case 30, a float 60 arranged within the case 30, and a fixing member 42 that is formed of a support portion 55 and a flange portion 45, which fixes the case 30 to a fuel tank 25, and the like.

The case 30 is a generally bell-shaped member made of resin that is open at the bottom. An opening 31 is formed in the center of the upper wall portion of the case 30, and a valve seat 33 is formed in an internal space 32 below the opening 31. Further, a passage 34, which encloses the opening 31, is formed integrally with the case 30. This passage 34 is connected to a canister, not shown, provided outside of the fuel tank 25 via a pipe, also not shown.

A plurality of vertical ribs 35 is arranged at equidistant intervals along the inside wall surface in the case 30. The ribs 35 maintain a space between the inside wall surface of the case 30 and the side wall surface of the float 60, thus forming passages for the fuel vapor and the like. The peripheral part of the ribs 35 also guides the float 60 as it moves vertically.

A plurality of protrusions 36 for attaching the fixing member hangs down from the bottom portion of the case 30. These protrusions 36 are angled outwards somewhat from the outside surface of the case 30. A grooved portion 37 is formed in the outer periphery of the base portion of the protrusions 36, which engages with an insertion hole 51 in the flange portion 45, to be described later. Also, a retaining member 38 is formed on a side portion of the case 30 on the side opposite the passage 34. This retaining member 38 has a vertical through-hole with which a retaining piece 49 of the flange portion 45, to be described later, engages. Also, two vent holes 39 are provided in the outside surface of the case 30 above the retaining member 38, as shown in FIG. 4, to allow fuel vapor into the case 30.

The fixing member 42 is a resin or metal member which includes the flange portion 45 and the support portion 55, both of which are integrally formed. It should be noted that while the flange portion 45 and the support portion 55 are integrally formed in this example embodiment, they may also be formed separately and then assembled together into a single unit.

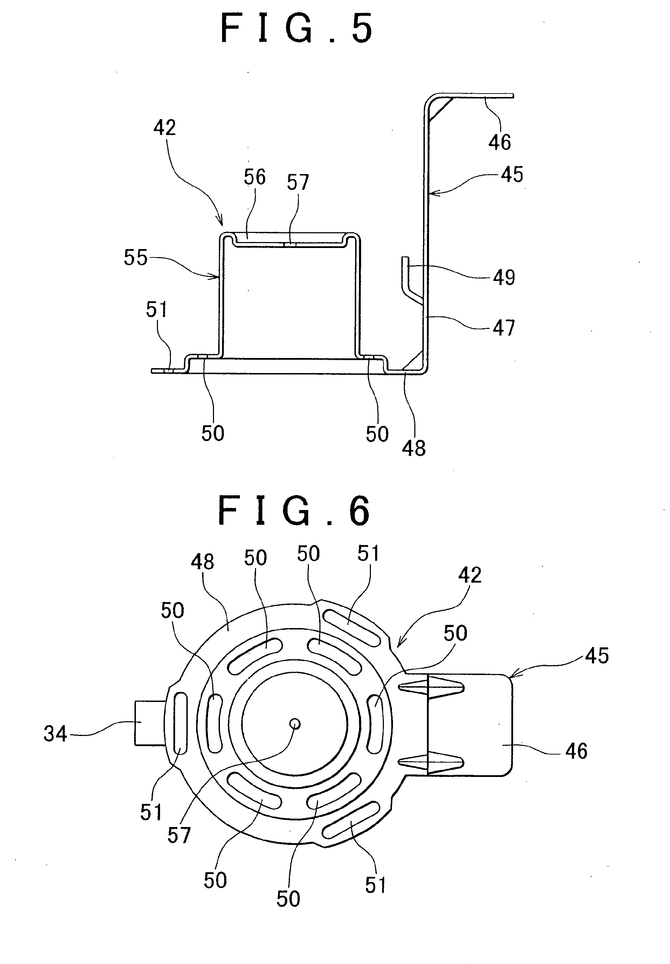

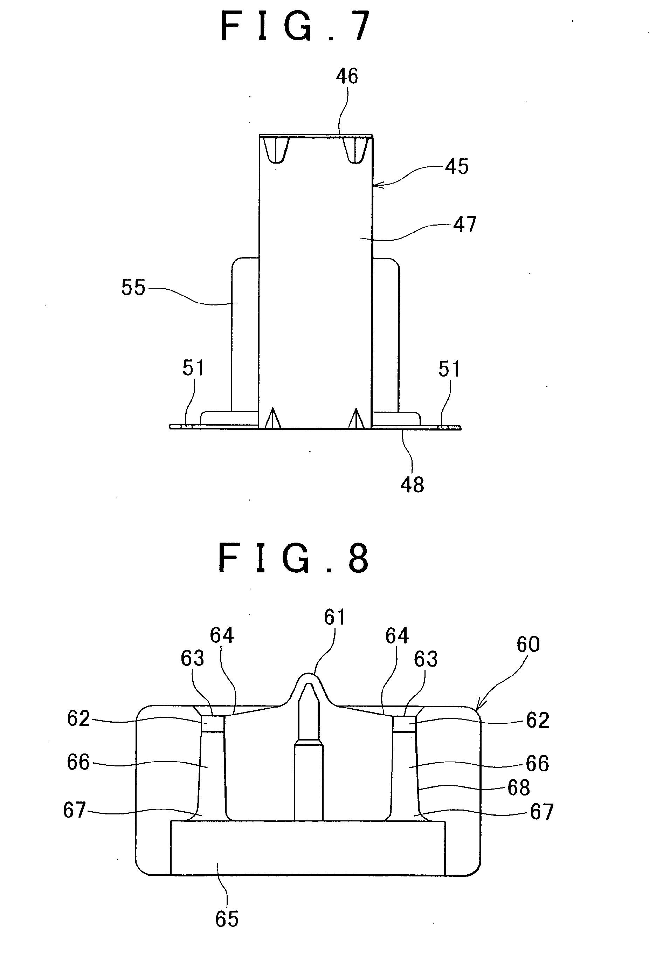

The flange portion 45 includes an upper end horizontal portion 46, a middle vertical portion 47, and a lower end horizontal portion 48, as shown in the sectional view of FIG. 5, the bottom view of FIG. 6, and the back view of FIG. 7. The upper end horizontal portion 46 and the middle vertical portion 47 are both rectangular while the lower end horizontal portion 48 is generally disc-shaped. The upper end horizontal portion 46, the middle vertical portion 47, and the lower end horizontal portion 48 together form a crank shape, as shown in FIGS. 1 and 5.

The upper surface of the upper end horizontal portion 46 is fixed to the upper surface of the fuel tank 25 by means such as welding or an adhesive. The retaining piece 49 is attached to the surface of the middle vertical portion 47 that is on the side opposite the upper end horizontal portion 46. When attaching the case 30 to the fixing member 42, the tip of the retaining piece 49 is inserted into the through-hole of the retaining member 38 formed on the side portion of the case 30 such that the case 30 is supported from the side surface. As a result, the two vent holes 39 for fuel vapor or the like shown in FIG. 4 which are provided in the upper outside surface of the case 30 are blocked by the middle vertical portion 47, which minimizes the possibility that fuel inside the fuel tank 25 entering the case 30 through the vent holes 39.

The lower end horizontal portion 48 is generally disc-shaped with the cylindrical support portion 55 protruding upward formed by drawing or the like at the center portion. A plurality (six are shown in the drawing) of fuel entrance ports 50 for allowing fuel to flow from the case 30 to the fuel tank 25 are formed in the outer periphery of the lower end horizontal portion 48. In addition, a plurality (three are shown in the drawing) of insertion holes 51 into which the protrusions 36 which hang down from the bottom portion of the case 30 are inserted are formed on the outer periphery of the fuel entrance ports 50.

The support portion 55 is formed in a hollow cylinder shape by, for example, drawing the center portion of the lower end horizontal portion 48. The support portion 55 corresponds to a support member which supports the float 60. A recess 56 for supporting one end of a spring, to be described later, is formed in the top surface of the support portion 55. Further, a hole 57 which provides communication between the fuel tank 25 and the inside of the case 30 is formed in the center of the recess 56.

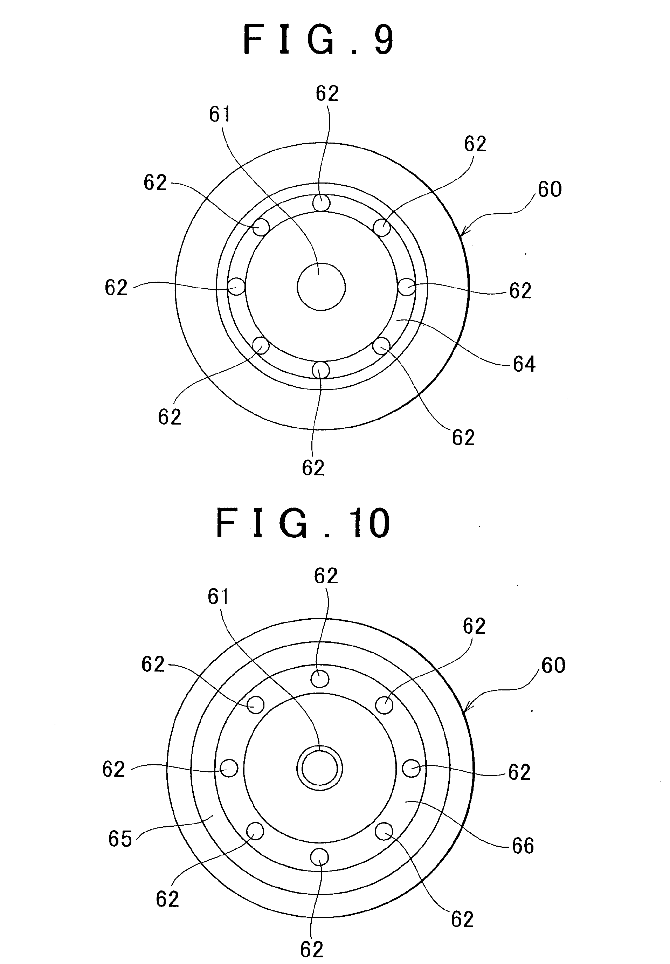

The float 60 is a resin member with a generally rectangular cross-section and a circular planar surface, as shown in the sectional view of FIG. 8, the plan view of FIG. 9, and the bottom view of FIG. 10. A valve body 61 is formed in the center portion on the top surface of the float 60. A plurality (eight are shown in the drawing) of communicating passages 68 are formed around the valve body 61 to enable communication between the areas above and below the float 60.

A beveled depression 64 is formed at the peripheral edge of the communicating passages 68 on the top side of the float 60. The beveled depression 64 is formed concentrically centered around the valve body 61. Also, a bottom recess 65 that is depressed upwards is formed in the bottom portion of the float 60. A lower end open portion 67 at the other end of the communicating passages 68 is formed in the bottom recess 65.

The lower end open portion 67 is formed in a position in which it becomes blocked off from a ring-shaped passage 71 formed by the inside surface of the case 30 and the side wall surface of the support portion 55 when the valve body 61 shown in FIG. 1 with the valve open and the float 60 and the support portion 55 abut one another. The communicating passage 68 in this invention may also be formed of a ring-shaped ascending recessed portion 66 in which a portion of the bottom recess 65 of the float 60 is formed depressed farther upwards than the rest of the bottom recess 65, and a communicating port 62 which forms an open portion in the top portion of the float 60. In other words, any configuration can be used as long as it allows communication between the area above the float 60 and the area below the float 60 so that fuel which has made its way above the float 60 is able to flow downward.

Also, the diameter D of the float 60 is greater than the diameter d of the support portion 55, as shown in FIG. 2. Fuel that enters the ring-shaped passage 71 formed by the inside surface of the case 30 and the side wall surface of the support portion 55, and strikes the bottom surface of the float 60, which raises raising the float 60.

Assembly of the fuel-effusion prevention valve 20 will now be described. During assembly, the case 30 is first placed upside down. The float 60 is then inserted into the case 30 by seating the valve body 61 in the valve seat 33 formed at the opening 31 of the case 30. Next, a coil-shaped spring 70 is inserted into the ring-shaped ascending recessed portion 66 formed in the float 60. The diameter of the spring 70 is substantially the same as the diameter of the ring-shaped ascending recessed portion 66. The spring 70 helps to lift the float 60 when fuel enters the case 30.

Next, the fixing member 42 is inserted into the bottom portion of the case 30. At this time, the other end portion of the spring 70 abuts the recess 56 formed in the top surface of the support portion 55. The bottom portion of the case 30 is covered by placing the lower end horizontal portion 48 of the fixing member 42 so that it opposes the bottom portion of the case 30 and inserting the protrusions 36 which hang down from the bottom portion of the case 30 into the insertion holes 51 formed in the lower end horizontal portion 48. The protrusions 36 extend slightly outward at the tips and have spring to them.

Thus, the protrusions 36 are pressed to fit into the insertion holes 51. After the protrusions 36 are fitted into the insertion holes 51, the grooved portions 37 formed in the outer peripheral portion of the protrusions 36 engage with the edges of the insertion holes 51, thus completing assembly of the members. In this manner, the fixing member 42 and the case 30 can be assembled together in a one-touch operation, which improves productivity. The retaining piece 49 provided on the flange portion 45 engages with the retaining member 38 provided on the side portion of the case 30 at the same time the protrusions 36 are inserted into the insertion holes 51.

The fuel-effusion prevention valve 20 is complete after the fixing member 42 and the case 30 have been assembled and the case 30 is placed right-side up, in the manner shown in FIG. 1. The upper end of the upper end horizontal portion 46 of the flange portion 45 is then attached to the inside surface of the upper portion of the fuel tank 25 by welding or with an adhesive or the like.

When the case 30 is right-side up, the outer diameter d of the support portion 55 is smaller than both the inner diameter of the case 30 and the outer diameter D of the float 60, resulting in the formation of the ring-shaped passage 71 between the inner wall portion of the case 30 and the side wall surface of the support portion 55.

Next, the operation will now be described. During normal operation, the fuel level 26 is located as shown in FIGS. 1 and 2. Fuel vapor produced in the fuel tank 25 enters the case 30 through the vent holes 39 and the fuel entrance ports 50 and flows to the canister via the opening 31 and the passage 34. Even if the fuel tank 25 vibrates and the fuel level 26 rises so that fuel blocks off the fuel entrance ports 50, the fuel vapor can still be discharged without interference through the vent holes 39 because they are provided higher in the case 30.

When the vehicle bounces up and down or turns, the fuel level 26 undulates greatly and fuel enters the case 30 through the fuel entrance ports 50. The fuel then travels from the ring-shaped passage 71 between the inside wall portion of the case 30 and the side wall surface of the float 60, and may flow through the opening 31 into the passage 34.

As the fuel travels through the ring-shaped passage 71, it accelerates and strikes the flat portion of the lower portion of the float 60. As a result, the float 60 is quickly lifted up so that the valve body 61 abuts the valve seat 33, to close off the opening 31. Therefore, even if the fuel were to reach the top surface of the float 60, little or none would flow out of the case 30 through the opening 31 because the float 60 abuts the case 30.

When the valve body 61 is in the valve-open position shown in FIG. 1, fuel is prevented from flowing between the lower end open portion 67 of the float 60 (shown in FIG. 8) and the ring-shaped passage 71. Thus, it is possible to minimize as the amount of fuel that flows up through the ring-shaped passage 71 reaching the top surface of the float 60 via the communicating passage 68. Thus, minimizing the amount of fuel that flows out of the case 30 through the opening 31 before the valve body 61 closes the valve.

Fuel that has reached the top surface of the float 60 accumulates in the beveled depression 64 (shown in FIG. 8) formed in the top surface, and is then returned to the fuel tank 25 via the communicating port 62 and the ring-shaped ascending recessed portion 66, as shown by the arrows. Moreover, when the valve body 61 is in the valve-open position shown in FIG. 1, fuel that flows down through the communicating port 62 and the ring-shaped ascending recessed portion 66 accumulates in the recess 56 formed in the top surface of the support portion 55 and is then returned to the fuel tank 25 through the hole 57 formed in the center of the recess 56, as shown by the arrows.

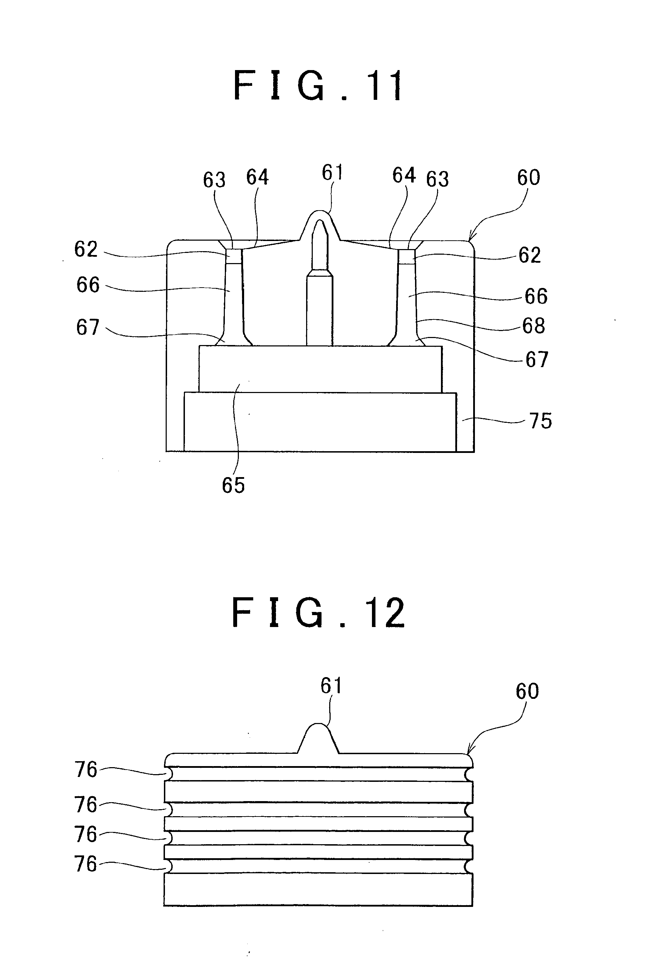

FIG. 11 shows a first modified example of the float 60. The float 60 according to this first modified, the bottom end of the float 60 includes a cylindrical skirt portion 75 around the periphery of the float 60. If the height of the fuel tank 25 is reduced, the height of the fuel-effusion prevention valve 20, and consequently the float 60, is also reduced. Thus, it is no longer possible to increase the height of the float 60. As a result, the float 60 may move upward off-center, for example, which would inhibit it from moving smoothly up and down along the ribs 35 inside the case 30.

With the float 60 according to the first modified example, the skirt portion 75 enables the height of the side wall surface of the float 60 along the ribs 35 to be increased, thus preventing adverse effects such as those described above. In FIG. 11, the float 60 and the skirt portion 75 are shown integrally formed. Alternatively, however, both members may be formed separately and then made into a single unit by means such as welding or an adhesive or the like. Alternatively, the cylindrical skirt portion 75 does not have to be continuous, but rather may be shaped in a series of intermittent arcs.

FIG. 12 shows a second modified example of the float 60. The float 60 according to this second modified example has a groove formed in the circumferential direction in the side wall surface of the float 60. In this example, a plurality of the ring-shaped grooves 76 are formed in the side wall surface of the float 60. According to this configuration, the surface area of the side wall surface of the float 60 increases, which increases the force pushing up on the float 60 from fuel that has entered the case 30. This configuration also reduced the contact area between the ribs 35 and the side wall surface of the float 60. As a result, the valve body 61 of the float 60 can be moved to abut the valve seat 33 more quickly, making it possible to more reliably prevent an outflow of fuel. Further, the skirt portion 75 shown in FIG. 11 can also be added to the float 60 in this example. The groove formed in the circumferential direction does not have to be in the shape of a continuous ring. Alternatively, it may be in the shape of a spiral.

This invention is not limited to the configuration of the foregoing example embodiment. To the contrary, changes in design may be made as appropriate within the intended scope of the invention.

## Claims

1. A fuel-effusion prevention valve which includes a case (30) in which an open portion (31) is formed and which is mounted inside a fuel tank (25), and a valve seat (33) which is formed in the open portion (31), and a float (60) which has a valve body (61) able to close off the open portion of the valve seat (33) and which moves freely up and down in the case (30), **characterized by** comprising:
at least one communicating passage (68) which extends from a top surface to a bottom surface of the float (60) formed in the float (60).

2. The fuel-effusion prevention valve according to claim 1, wherein a plurality of the communicating passages (68) are formed at substantially equidistant intervals concentrically centered around the valve body (61).

3. The fuel-effusion prevention valve according to claim 1 or 2, wherein a beveled depression (64) is formed at the peripheral edge of each communicating passage (68) in the top surface of the float (60).

4. The fuel-effusion prevention valve according to claim 3, wherein the beveled depression (64) is formed concentrically centered around the valve body (61).

5. The fuel-effusion prevention valve according to any one of claims 1 to 4, **characterized by** further comprising:
a support member (55), provided below the float (60) that supports the float (60) when the valve is open, wherein the support member (55) interrupts the flow of fuel from the communicating passage (68) into an area enclosed by the support member (55) and an inside wall surface of the case (30) when the float abuts (60) the support member (55).

6. The fuel-effusion prevention valve according to claim 5, wherein a depression (56) is formed on an inner peripheral side of a portion of the support member (55) that abuts the float (60), in an upper portion of the support member (55), and a hole (57) is formed in the depression (56).

7. The fuel-effusion prevention valve according to claim 5 or 6, wherein a portion of a bottom portion of the float (60) is positioned above the area (71) enclosed by the inside wall surface of the case (30) and a side wall surface of the support member (55).

8. The fuel-effusion prevention valve according to any one of claims 1 to 7, **characterized by** further comprising:
a bottom portion of the float includes a skirt portion (75) around the periphery of the float (60).

9. The fuel-effusion prevention valve according to any one of claims 1 to 8, wherein a groove (76) is formed in a circumferential direction in a side wall surface of the float (60).

10. The fuel-effusion prevention valve according to any one of claims 1 to 9, **characterized by** further comprising:
a crank-shaped flange portion (45), wherein the flange portion (45) is attached to an upper portion of the fuel tank (25), and a vent hole (39) is formed in a side surface of an upper portion of the case (30) that is adjacent to a middle vertical portion (47) of the flange portion (45).
